# EUROPEAN PATENT APPLICATION

(11) **EP 2 808 702 A1**
(43) Date of publication of application: **03.12.2014**
(21) Application number: 14167735.1
(22) Date of filing: 09.05.2014
(51) Int. Cl.: G01S 19/24

(54) **Ephemeris collection device and method**

(30) Priority: 24.05.2013 CN 201310198994; 31.03.2014 US 201414230129
(71) Applicant: O2 Micro, Inc., Santa Clara, CA 95054 (US)
(72) Inventor: Zou, Jinghua, P.R.C. 610041 Chengdu (CN); Zhang, Weihua, P.R.C. 610041 Chengdu (CN); Gou, Juan, P.R.C. 610041 Chengdu (CN)
(74) Representative: Lippert, Stachow & Partner

(57) **Abstract**

The present disclosure discloses an ephemeris collection device and a method of collecting ephemeris data. The ephemeris collection device may include a data storage unit, configured to store a first part of a first ephemeris subframe if a synchronization of the first ephemeris subframe is not completed; and a subframe merge unit, coupled with the data storage unit and configured to receive a second part of the first ephemeris subframe from the subframe synchronizer and retrieve the first part of the first ephemeris subframe from the data storage unit during a subsequent transmission of the first ephemeris subframe. A complete first ephemeris subframe is obtained based on the first part and the second part of the first ephemeris subframe.

## Description

### RELATED APPLICATION

The present application claims priority to Chinese Patent Application No. 201310198994.8, titled "Ephemeris Collection Device and Method", filed on May 24, 2013 with the State Intellectual Property Office of the People's Republic of China (SIPO).

### TECHNICAL FIELD

The present disclosure relates to an ephemeris collection device and method, and more particularly to improving a first positioning time (Time To First Fix, TTFF) of a receiver in a positioning system after a cold start.

### BACKGROUND

Currently, satellite positioning technology has been widely used in many applications, and people use many parameters to evaluate performance of positioning system receivers (e.g., Global Positioning System (GPS) receiver or Global navigation satellite system (GLONASS) receiver). One of the parameters is the delay between the time when a receiver is powered on and the time when the receiver identifies its current position (also known as TTFF). Generally, receivers with the shortest TTFF are preferred. However, the TTFF of a conventional GPS receiver may range from 30 seconds to several minutes. If the receiver is in a cold start state (i.e., no information is available), the situation is worse. For example, in the cold start state, observation time, satellite navigation information, etc., are all unknown to the receiver.

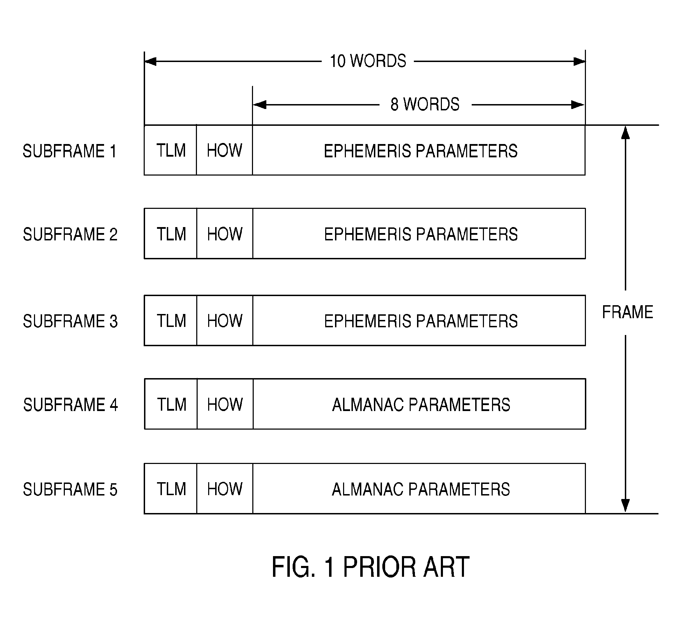

Before the receiver outputs a first position coordinate, it has to complete the collection of a satellite ephemeris (orbit parameter) by demodulating satellite navigation data. Therefore, the efficiency of the satellite ephemeris collection is the key to the TTFF performance of the receiver. Take GPS as an example, FIG. 1 shows data structure of one page of satellite navigation data. One word consists of 30 bits, one subframe consists of 10 words, and one page (i.e., one frame) consists of 5 subframes. Each subframe needs 6 seconds to be transmitted. Therefore, it will take 30 seconds to transmit one page of satellite navigation data. Generally, the GPS satellite updates its ephemeris every 2 hours, and if the update does not happen, the information carried in subframes 1-5 is repeated every 30 seconds. As shown in FIG. 1, ephemeris parameters are transmitted in the subframe 1, the subframe 2 and the subframe 3, while almanac parameters are transmitted in the subframe 4 and the subframe 5. Therefore, the receiver must collect the subframes 1-3 to obtain a complete satellite ephemeris.

However, if the receiver is in the cold start state, the receiver is likely to start receiving bit data from the middle of a subframe, instead of the head of the subframe. For example, the receiver is likely to start receiving bit data from a Handover word (HOW) of the subframe 1. Since a telemetry (TLM) word of the subframe 1 is lost, the receiver cannot complete the synchronization and it has to discard the subframe 1. As a result, the receiver has to wait 5.4 seconds (i.e., the time for transmitting other 9 words of the subframe 1 besides the TLM word) to start receiving the subframe 2 and to perform following operations, which will greatly reduce the TTFF performance of the receiver.

### SUMMARY

To solve the above-mentioned problems, the present disclosure provides an ephemeris collection device. The ephemeris collection device of an embodiment may include a data storage unit, configured to store a first part of a first ephemeris subframe if a synchronization of the first ephemeris subframe is not completed; and a subframe merge unit, coupled with the data storage unit, and configured to receive a second part of the first ephemeris subframe and retrieve the first part of the first ephemeris subframe from the data storage unit during a subsequent transmission of the first ephemeris subframe. A complete first ephemeris subframe is obtained based on the first part and the second part of the first ephemeris subframe. The ephemeris collection device may comprise a subframe synchronizer coupled to the subframe merge unit, and configured to synchronize a plurality of subframes. The subframe synchronizer may be configured to identify a plurality of ephemeris subframes and a plurality of almanac subframes among the plurality of subframes. The ephemeris collection device may comprise a counter, a count value of which indicates a number of bits stored in the data storage unit. The ephemeris collection device may be configured to identify a start position for receiving the plurality of subframes according to the count value after the subframe synchronizer completes a synchronization of a second subframe, wherein the plurality of subframes may comprise the first ephemeris subframe and the second subframe following the first ephemeris subframe. The ephemeris collection device may comprise an ephemeris parser, coupled to the subframe synchronizer and the subframe merge unit, and configured to detect whether the plurality of ephemeris subframes have any character error, wherein an ephemeris subframe is discarded if any character error from the ephemeris subframe is detected, and wherein a satellite ephemeris is obtained based on the plurality of ephemeris subframes having no detected character error. The ephemeris collection device may comprise an almanac parser, coupled to the subframe synchronizer, and configured to receive a plurality of almanac subframes to obtain a satellite almanac. The ephemeris parser may be configured to check a clock parameter, wherein the ephemeris collection device discards the plurality of subframes until an ephemeris update is completed depending on whether the clock parameter indicates that the ephemeris update is going to happen. The ephemeris collection device may comprise a demodulator, coupled to the data storage unit, and configured to demodulate navigation data and transmit the demodulated data to the data storage unit. Each of the plurality of subframes may comprise a handover word and a telemetry word, which are configured to complete subframe synchronization and indicate subframe ID respectively. The ephemeris collection device may comprise a receiver, wherein the receiver retransmits the plurality of subframes every 30 seconds, and wherein an ephemeris update may happen every 2 hours.

The present disclosure further provides a satellite receiver, including a signal receiver, configured to receive a satellite signal; and an ephemeris data collection device, in particular according to the invention. The ephemeris data collection device may include a data storage unit, configured to store a first part of a first ephemeris subframe if a synchronization of the first ephemeris subframe is not completed; and a subframe merge unit, coupled with the data storage unit, and configured to receive a second part of the first ephemeris subframe , retrieve the first part of the first ephemeris subframe from the bit data storage unit during a next retransmission of the first ephemeris subframe, and obtain the complete first ephemeris subframe based on the first part and the second part of the first ephemeris subframe. The ephemeris data collection device may comprise a subframe synchronizer coupled to the subframe merge unit, and configured to synchronize a plurality of subframes. The ephemeris data collection device may comprise a counter, a count value of which indicates a number of bits stored in the data storage unit. The ephemeris data collection device may be configured to identify a start position for receiving a plurality of subframes according to the count value after the subframe synchronizer completes a synchronization of a second subframe, wherein the plurality of subframes may comprise the first ephemeris subframe and the second subframe following the first ephemeris subframe. The ephemeris data collection device may comprise an ephemeris parser, coupled to the subframe synchronizer and the subframe merge unit, and configured to detect whether the plurality of ephemeris subframes have any character error, wherein an ephemeris subframe is discarded if any character error from the ephemeris subframe is detected, and wherein a satellite ephemeris is obtained based on the plurality of ephemeris subframes having no detected character error. The receiver may comprise an almanac parser, coupled to the subframe synchronizer, and configured to receive the plurality of almanac subframes to obtain a satellite almanac. The ephemeris parser may be configured to check a clock parameter, wherein the receiver processor discards the plurality of subframes until an ephemeris update is completed depending on whether the clock parameter indicates that the ephemeris update is going to happen. The ephemeris data collection device may comprise a demodulator, coupled to the data storage unit, and configured to receive and demodulate navigation data and transmit the demodulated data to the data storage unit. Each of the plurality of subframes may comprise a handover word and a telemetry word, which are configured to complete subframe synchronization and indicate subframe ID respectively. The receiver may retransmit the plurality of subframes every 30 seconds, wherein an ephemeris update may happen every 2 hours.

The present disclosure further provides an ephemeris collection method. In an embodiment, the method may include storing a first part of a first ephemeris subframe in a data storage unit if a synchronization of the first ephemeris subframe is not completed; receiving a second part of the first ephemeris subframe during a subsequent transmission of the first ephemeris subframe; retrieving the first part of the first ephemeris subframe from the data storage unit; and obtaining a complete first ephemeris subframe based on the first part and the second part of the first ephemeris subframe. The ephemeris collection method may comprise calculating a number of bits stored in the data storage unit; and identifying a start position for receiving a plurality of subframes after a synchronization of a second subframe is received, wherein the plurality of subframes may comprise the first ephemeris subframe and the second subframe following the first ephemeris subframe. The ephemeris collection method may comprise receiving a plurality of ephemeris subframes among a plurality of subframes; detecting whether the plurality of ephemeris subframes have any character error; discarding an ephemeris subframe if any character error from the ephemeris subframe is detected; transmitting obtaining a satellite ephemeris based on the plurality of ephemeris subframes having no detected character error. The ephemeris collection method may comprise receiving a plurality of almanac subframes among the plurality of subframes to obtain a satellite almanac. The ephemeris collection method may comprise checking a clock parameter; and discarding the plurality of subframes until an ephemeris update is completed depending on whether the clock parameter indicates that the ephemeris update is going to happen. Each of the plurality of subframes may comprise a handover word and a telemetry word, which are configured to complete subframe synchronization and to indicate subframe ID respectively. The plurality of subframes may be retransmitted every 30 seconds, wherein an ephemeris update may happen every 2 hours.

Compared with the prior art, the ephemeris collection device and method according to the present disclosure use the bit data storage unit and the subframe merge unit to merge content to obtain the complete subframe. The novelty approach of the present disclosure can save ephemeris collection time, thus improving the collection efficiency of the satellite ephemeris and enhancing the first positioning time performance of the cold start of the receiver.

The following gives a detailed description of the proposed technology in combination with the drawings and specific embodiments, so that features and benefits of the present disclosure become more apparent.

### BRIEF DESCRIPTION OF THE DRAWINGS

Features and benefits of embodiments of the claimed subject matter will become apparent as the following detailed description proceeds, and upon reference to the drawings, wherein like numerals depict like parts, and in which:
FIG. 1 shows data structure of one page of satellite navigation data.
FIG. 2 illustrates a method for collecting ephemeris from satellite navigation data in accordance with one embodiment of the present disclosure.
FIG. 3 shows a schematic diagram of a receiver of a satellite positioning system in accordance with one embodiment of the present disclosure.
FIG. 4 shows a schematic diagram of an ephemeris collection device in accordance with one embodiment of the present disclosure.
FIG. 5 illustrates a flowchart of an ephemeris collection method in accordance with one embodiment of the present disclosure.

### DETAILED DESCRIPTION

Reference will now be made in detail to the embodiments of the present disclosure. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present disclosure, numerous specific details are set forth in order to provide a thorough understanding of the present disclosure. However, it will be recognized by one of ordinary skill in the art that the present disclosure may be practiced without these specific details. In other instances, well known methods, procedures, components, and circuits have not been described in detail as not to unnecessarily obscure aspects of the present disclosure.

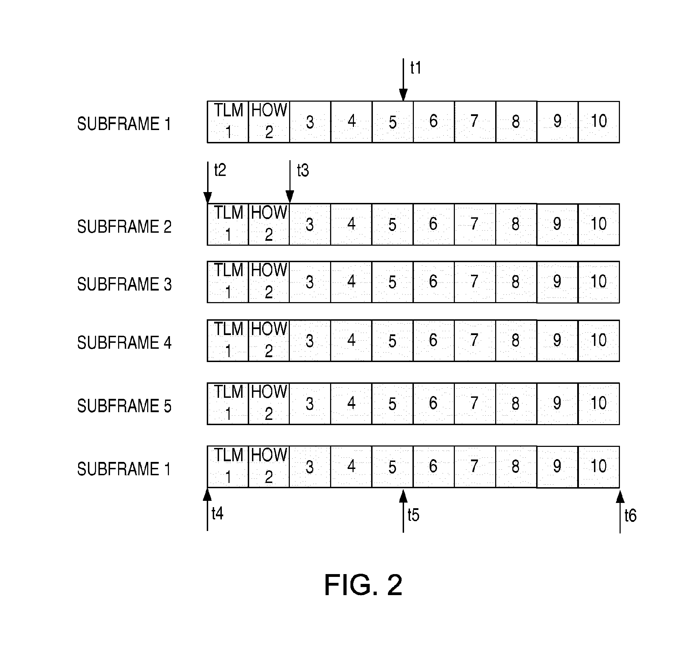

FIG. 2 illustrates a method for collecting ephemeris from satellite navigation data in accordance with one embodiment of the present disclosure. As shown in FIG. 2, each of the subframes 1-5 includes a telemetry (TLM) word and a Handover word (HOW), which can be used for subframe synchronization and indicating subframe ID respectively. Each of the subframes 1-3 further includes an 8-word ephemeris parameter, and each of the subframes 4-5 further includes an 8-word almanac parameter. In a use case, it is possible that when a GPS receiver is in a cold start state, it starts to receive bit data from the middle of a certain subframe (i.e., a first subframe). At this time, the GPS receiver does not know the position of the first received bit data regarding one page of satellite navigation data (e.g., the first received bit data corresponds to which subframe, which word and which bit in the satellite navigation data). The position of the first received bit data can also be referred to as a start position for the receiver to start receiving the subframes. Since the TLM word (word 1) of this subframe is lost, the GPS receiver cannot complete the synchronization. The GPS receiver according to present disclosure starts to store navigation bit data instead of discarding this subframe. Once the receiver completes the synchronization of a second subframe (either an ephemeris subframe or an almanac subframe), the position of the first received bit data and the subframe boundary between the first subframe and the second subframe can be identified by the receiver according to the preamble information included in the TLM word (word 1) of the second subframe and the subframe ID included in the HOW word (word 2) of the second subframe.

In the embodiment illustrated in FIG. 2, in a use case, the GPS receiver may be in the cold start state and may start to receive bit data from the middle of the subframe 1 (e.g., at a time point t1). In one embodiment of the present disclosure, the subframe 1 can be referred to as a first ephemeris subframe. The GPS receiver stores the received bit data (e.g., a first part) of the first ephemeris subframe in a memory (e.g., a bit data storage unit). At this time, the GPS receiver does not know the position of the first received bit data regarding one page of satellite navigation data (e.g., the first received bit data corresponds to which subframe, which word and which bit in the satellite navigation data). Since the TLM word (word 1) of this subframe 1 is lost, the GPS receiver cannot complete the synchronization. Unlike conventional methods, the GPS receiver according to present disclosure starts to store navigation bit data in the memory and starts a counter (included in the memory or coupled to the memory) to indicate the number of bits stored in the memory. During a time period between t2 and t3, the GPS receiver receives the TLM word (word 1) and the HOW word (word 2) of the subframe 2. Then the GPS receiver completes the synchronization of the subframe 2 according to the preamble information included in the TLM word (word 1). Furthermore, according to the subframe ID included in the HOW word (word 2), the GPS receiver identifies that the subframe being currently received is the subframe 2. In one embodiment of the present disclosure, the subframe 2 can be referred to as a second ephemeris subframe. After completing the synchronization of the subframe 2, the GPS receiver can identify the start position of each subframe received afterwards according to the count value of the counter. For example, in the embodiment illustrated in FIG. 2, in a use case, at a time point t3, the count value of the counter may indicate that there are 220 bits of satellite navigation data stored in the memory. Since one word consists of 30 bits, the GPS receiver can derive that 7 entire words and 10 bits have been stored. Furthermore, because 2 of those 7 words include the TLM word (word 1) and the HOW word (word 2) of the subframe 2, the GPS receiver can derive that other stored parts are 21 st-30th bits of the word 5 and words 6-10 of the subframe 1. It means that the first received bit data after the cold start is the 21 st bit of the word 5 of the subframe 1. Therefore, according to the position of the first received bit data, the GPS receiver identifies that the previous unreceived part (e.g., a second part) of the subframe 1 is from the word 1 of the subframe 1 to the 20th bit of the word 5 of the subframe 1. Since the information carried in subframes 1-5 is repeated every 30 seconds, the GPS receiver continues to collect the subframe 1 after receiving the subframe 5. This time, the GPS receiver only needs to collect the previous unreceived part (from the word 1 of the subframe 1 to the 20th bit of the word 5 of the subframe 1) during the time period between t4 and t5. The complete subframe 1 can be obtained based on (e.g., by merging) the first part received between t1 and t2 (21 st-30th bits of the word 5 and words 6-10 of the subframe 1) and the second part received between t4 and t5 (from the word 1 of the subframe 1 to the 20th bit of the word 5 of the subframe 1). Therefore, as FIG. 2 shown, at a time point t5, the GPS receiver completely collects the subframes 1-3 to obtain a satellite ephemeris. Compared with conventional methods (i.e., discarding the subframe 1 at the time point t1 and collecting subframes 1-3 during the time period between t2 and t6), the GPS receiver according to present disclosure collects ephemeris from the satellite navigation data can save time (e.g., 3.2 seconds shown in the example of FIG. 2), thus improving the collection efficiency of the satellite ephemeris and enhancing the TTFF performance of the GPS receiver.

In one embodiment, the receiver can further check an issue-of-data clock (IODC) parameter in the subframe 1 and/or an issue-of-data ephemeris (IODE) parameter in the subframes 2 and 3. If these parameters indicate that the current clock time is close to the ephemeris update time (e.g., every 2 hours), it means an ephemeris update is going to happen. In this situation, the GPS receiver stops collecting subframes until the ephemeris update is completed.

It should be noted that, although the GPS receiver starts to receive bit data from the 21 st bit of the word 5 of the subframe 1 in FIG. 2, the start position is only shown by way of example, and not by way of limitation. The time saved for collecting ephemeris can vary from 0 to 6 seconds, depending on different start positions. Furthermore, although FIG. 2 is illustrated based on the structure of satellite navigation data of GPS system and the GPS receiver, one skilled in the art should understand that the present disclosure is not limited to this, and can be applied to other types of satellite positioning systems and subframe structures.

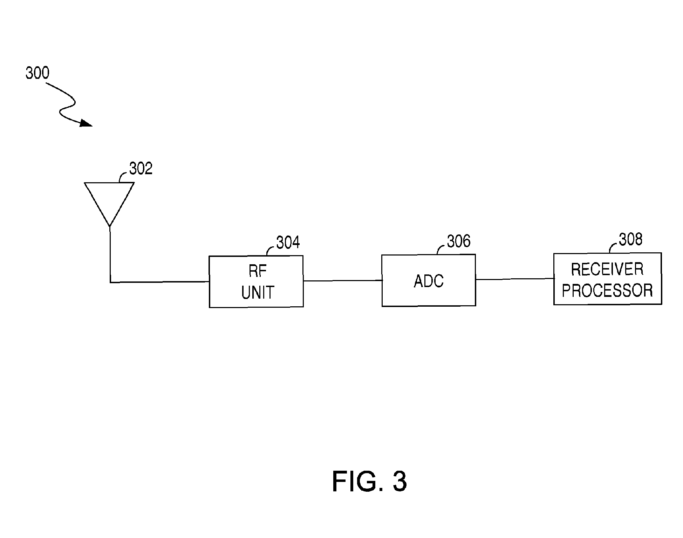

FIG. 3 shows a schematic diagram of a receiver 300 of a satellite positioning system (e.g., GPS or GLONASS) in accordance with one embodiment of the present disclosure. The receiver 300 includes an antenna 302, a radio frequency (RF) unit 304, an analog to digital converter (ADC) 306 and a processor 308. The receiver 300 receives a satellite signal from the antenna 302, and performs amplification and down-conversion operations on the satellite signal by the RF unit 304 coupled to the antenna 302. At this stage, the satellite signal is in an analog form. The analog to digital converter (ADC) 306 is coupled to the radio frequency unit 304 and is configured to convert the analog satellite signal to a digital form. Then the digitized satellite signal is transmitted to the processor 308 coupled to the analog to digital converter 306. The processor 308 is configured to collect navigation bit data including an ephemeris and an almanac.

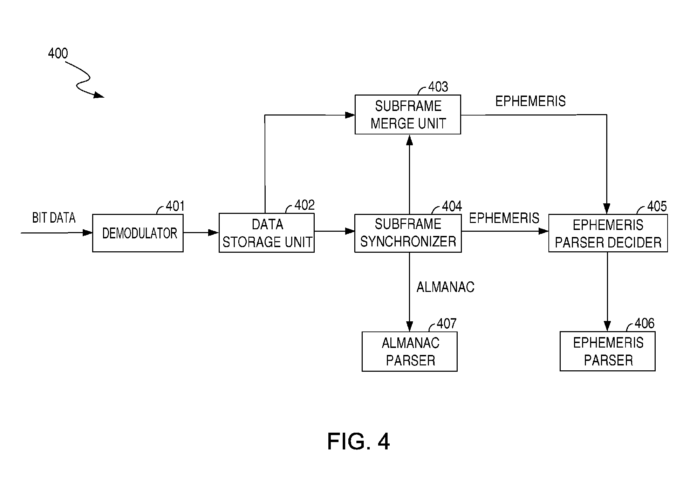

FIG. 4 shows a schematic diagram of an ephemeris collection device 400 in accordance with one embodiment of the present disclosure. The ephemeris collection device 400 can be implemented in the processor 308 of FIG. 3, which is configured to receive a plurality of subframes including a first ephemeris subframe and a second subframe following the first ephemeris subframe after a cold start of a receiver. As shown in FIG. 4, the ephemeris collection device 400 includes a demodulator 401, a data storage unit 402, a subframe merge unit 403, a subframe synchronizer 404, an ephemeris parser decider 405, an ephemeris parser 406 and an almanac parser 407. The demodulator 401 receives and demodulates navigation bit data and transmits the demodulated bit data to the data storage unit 402 and the subframe synchronizer 404. The data storage unit 402 is configured to store a first part of the received first ephemeris subframe if a synchronization of the first ephemeris subframe is not completed. The subframe synchronizer 404 is configured to synchronize each subframe received afterwards and identify a plurality of ephemeris subframes and a plurality of almanac subframes (e.g., by checking the TLM word and the HOW word in the subframe). The subframe merge unit 403 is configured to receive a second part of the first ephemeris subframe from the subframe synchronizer 404 and read the first part of the first ephemeris subframe from the bit data storage unit 402 during a next retransmission of the first ephemeris subframe. The subframe merge unit 403 obtains the complete first ephemeris subframe by merging the first part and the second part of the first ephemeris subframe.

As described above, the demodulator 401 receives and demodulates navigation bit data and transmits the demodulated bit data to the data storage unit 402, no matter the bit data belongs to a complete subframe or not. In ideal cases, if the received navigation bit data is complete (i.e., the receiver starts receiving bit data from the head of a subframe), there is no need to still store bit data in the data storage unit 402 (e.g., the data associated with the complete subframe can be cleared from the data storage unit 402). The receiver uses the subframe synchronizer 404 to complete the subframe synchronization and identify the subframe ID. For one GPS subframe of one page of navigation bit data, if the subframe is identified as one of the subframe 4 and the subframe 5 (i.e., almanac subframes including satellite almanac data), the subframe synchronizer 404 transmits the almanac subframe directly to the almanac parser 407 to obtain the satellite almanac. If the subframe is identified as one of the subframe 1 to the subframe 3 (i.e., ephemeris subframes including satellite ephemeris data), the ephemeris subframe is transmitted to the ephemeris parser decider 405. The ephemeris parser decider 405 is configured to detect whether the ephemeris subframe has any character error. If any character error from the ephemeris subframe is detected, the ephemeris collection device 400 can discard the ephemeris subframe and wait for next retransmission. Otherwise, the ephemeris collection device 400 can transmit the ephemeris subframe with no character error detected to the ephemeris parser 406 to obtain the satellite ephemeris. In one embodiment, the ephemeris parser decider 405 can further check an issue-of-data clock (IODC) parameter in the subframe 1 and/or an issue-of-data ephemeris (IODE) parameter in the subframes 2 and 3. If these parameters indicate that the current clock time is close to the ephemeris update time (e.g., every 2 hours), it means an ephemeris update is going to happen. In this situation, the GPS receiver stops collecting subframes until the ephemeris update is completed.

However, usually the received navigation bit data is not complete (i.e., the receiver starts receiving bit data from the middle of a first subframe so that the synchronization of the first subframe cannot be completed). Once the subframe synchronizer 404 completes the synchronization of a second subframe (either an ephemeris subframe or an almanac subframe), the start position for receiving bit data and the subframe boundary between the first subframe and the second subframe can be identified by the receiver according to the preamble information included in the TLM word (word 1) of the second subframe and the subframe ID included in the HOW word (word 2) of the second subframe. Then the receiver can clear data stored in the data storage unit 402, which is associated with the completed subframe synchronization. For example, when the subframe synchronizer 404 completes the synchronization of the second subframe, the data storage unit 402 clears the data associated with the second subframe, and finds that the bit data associated with the first ephemeris subframe (i.e., the first part of the first ephemeris subframe) is still stored in the data storage unit 402. To save cost, in one embodiment, the size of bit data storage unit 402 can be configured to be capable of storing one subframe and another 2 words frame head (i.e., 360 bits). However it is not limited to that, one skilled in the art should understand that the size of the data storage unit 402 can be set to any suitable value. These data (i.e., the first part) of the first ephemeris subframe will be used with another part (i.e., the second part) of the first ephemeris subframe by the subframe merge unit 403 to obtain the complete first ephemeris subframe.

Combined with FIG. 2 to describe, by way of example and not by way of limitation, in a use case, is the GPS receiver starts to receive bit data from the 21 st bit of the word 5 of the subframe 1, the synchronization of the subframe 1 cannot be completed. When the subframe synchronizer 404 completes the synchronization of the subframe 2 (at a time point t3), it is found that data storage unit 402 still stores the bit data associated with the subframe 1 (i.e., the first part collected between t1 and t2, 21 st-30th bits of the word 5 and words 6-10). For example, the processor 308 can include a counter (not shown in FIG. 4) coupled to the data storage unit 402 or included in the data storage unit 402, a count value of which indicates the number of bits stored in the data storage unit 402. After the synchronization of the subframe 2 is completed, a start position of each subframe received afterwards is identified according to the count value of the counter. Specifically for example, the count value of the counter indicates that there are 220 bits satellite navigation data stored in the data storage unit 402. Since one word consists of 30 bits, the processor 308 can derive that 7 entire words and 10 bits have been stored. Furthermore, given that 2 words of those 7 words are the TLM word (word 1) and the HOW word (word 2) of the subframe 2, the GPS receiver can derive that other stored parts are 21 st-30th bits of the word 5 and words 6-10 of the subframe 1. It means that the first received bit data after the cold start is the 21 st bit of the word 5 of the subframe 1. Then according to the position of the first received bit data, the GPS receiver determines that it still needs to receive the second part of the subframe 1 (i.e., from the word 1 to the 20th bit of the word 5) next time when subframe 1 is retransmitted, to obtain the complete subframe 1.

The subframe synchronizer 404 can complete the synchronization of the subframes 2-5 according to the preamble information included in the TLM word (word 1) and the subframe ID included in the HOW word (word 2). The subframes 2 and 3 are transmitted to the ephemeris parser decider 405 and the ephemeris parser 406 to obtain the satellite ephemeris, and the subframes 4 and 5 are transmitted to the almanac parser 407 to obtain the satellite almanac. Since the information carried in subframes 1-5 is repeated every 30 seconds, the GPS receiver continues to receive the subframe 1 after receiving the subframe 5. This time, the GPS receiver only needs to collect the previous unreceived part (i.e., from the word 1 of the subframe 1 to the 20th bit of the word 5 of the subframe 1) during the time period between t4 and t5. The subframe synchronizer 404 sends the second part of the navigation bit data to the subframe merge unit 403, and the subframe merge unit 403 reads the first part of the subframe 1 (i.e., 21 st-30th bits of the word 5 and words 6-10) from the data storage unit 402. The subframe merge unit 403 is configured to merge the first part and the second part of the navigation bit data to obtain the complete subframe 1, and then the subframe merge unit 403 transmits the merged subframe 1 to the ephemeris parser decider 405. Similar to the above description, the ephemeris parser decider 405 is configured to detect whether the ephemeris subframe has any character error. If any character error from the subframe 1 is detected, the ephemeris collection device 400 discards the subframe 1 . Otherwise, the ephemeris collection device 400 can transmit the subframe 1 with no character error detected to the ephemeris parser 406 to obtain the satellite ephemeris. In one embodiment, the ephemeris parser decider 405 can further check an issue-of-data clock (IODC) parameter in the subframe 1 and/or an issue-of-data ephemeris (IODE) parameter in the subframes 2 and 3. If these parameters indicate that the current clock time is close to the ephemeris update time (e.g., every 2 hours), it means an ephemeris update is going to happen. In this situation, the subframes 1-3 can be discarded until the ephemeris update is completed.

Unlike conventional navigation data processing, the ephemeris collection device according to the present disclosure includes a data storage unit and a subframe merge unit. If the receiver starts receiving the first ephemeris subframe from the middle of the first subframe, the navigation bit data (the first part) of the received first ephemeris subframe is stored in the data storage unit 402. After the subframe synchronizer 404 completes the synchronization of a second subframe (either an ephemeris subframe or an almanac subframe), the position of the first received bit data and the subframe boundary between the first subframe and the second subframe can be identified by the receiver according to the preamble information included in the TLM word (word 1) of the second subframe and the subframe ID included in the HOW word (word 2) of the second subframe.. Therefore, during a subsequent transmission of the first ephemeris subframe, the GPS receiver only needs to collect the previous unreceived bit data (the second part) of the first ephemeris subframe. Then the subframe merge unit 403 can obtain the complete first ephemeris subframe by merging the first part and the second part. The ephemeris collection device and the receiver of the present disclosure can save ephemeris collection time, thus improving the collection efficiency of the satellite ephemeris and enhancing the first positioning time performance after a cold start of the receiver.

It should be noted that, the ephemeris collection device 400 according to the present disclosure mainly aims to improve the time for collection of ephemeris. Therefore, in order to simplify the description and highlight the essence of present teaching, the above figures only illustrate merging the subframes including the satellite ephemeris data and then transmitting the subframes to the ephemeris parser decider and the ephemeris parser. However in practical operations (using a GPS receiver as an example), if the GPS receiver starts to receive bit data from the 21 st bit of the word 5 of the subframe 4, the GPS receiver cannot complete the synchronization of the subframe 4, and it temporarily stores the first part of the received subframe 4 in the bit data storage unit 402. After the synchronization of subframe 5 is completed, the GPS receiver can identify the position of the first received bit data and the subframe boundary as described above. Then, the GPS receiver can discard the previous stored part of the subframe 4 or merge the almanac subframe 4 in a way similar to the merge of the ephemeris subframe, which is not the limitation of the present disclosure. Please also note that, although the GPS receiver starts to receive bit data from the 21 st bit of the word 5 of the subframe 1 in the description of FIG. 4, this start position is only shown by way of example, and not by way of limitation. The time saved for collecting ephemeris can vary from 0 to 6 seconds, depending on different start positions. Furthermore, although it is described with GPS subframes and GPS receivers in FIG. 4, one skilled in the art should understand that the present disclosure is also applied to other kinds of satellite positioning systems and subframe structures, which is not the limitation of the present disclosure.

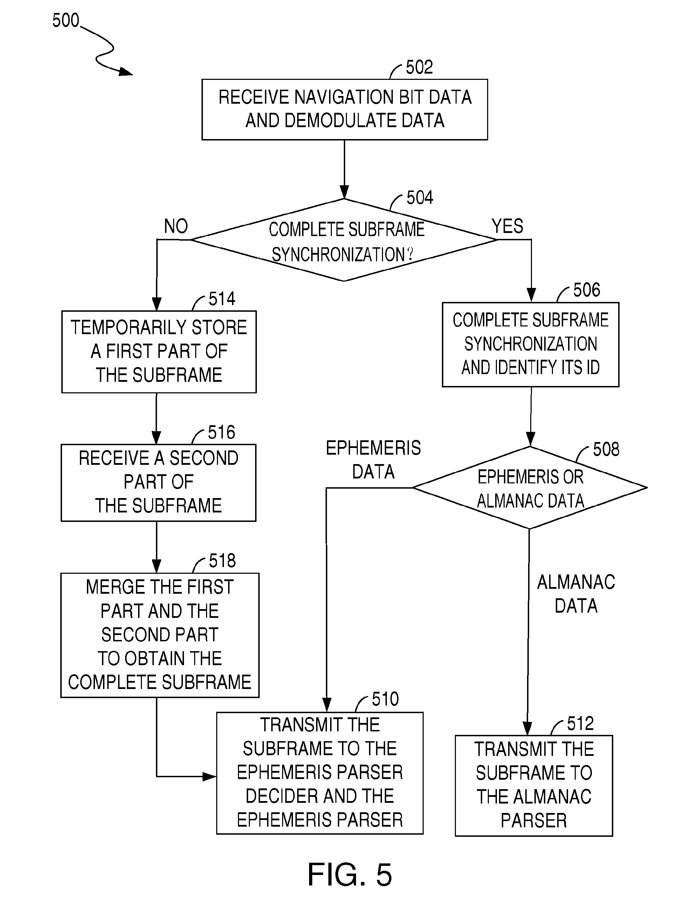

FIG. 5 illustrates a flowchart 500 of an ephemeris collection method in accordance with one embodiment of the present disclosure. FIG. 5 is described in combination with FIG. 2, FIG. 3, and FIG. 4. However, it is not limited to those embodiments.

In step 502, the demodulator 401 receives navigation data and demodulates the data.

In step 504, the subframe synchronizer 404 checks whether the subframe synchronization can be completed. If the received navigation data is complete and the subframe synchronizer 404 is able to complete the subframe synchronization (i.e., the receiver starts to receive data from the head of a subframe), it goes to step 506: the subframe synchronizer 404 completes its subframe synchronization and identifies its subframe ID. In step 508, the subframe ID is used to identify whether the subframe includes satellite ephemeris data or satellite almanac data. If the subframe is an ephemeris subframe including satellite ephemeris data, it goes to step 510: the subframe is transmitted to the ephemeris parser decider 405 and the ephemeris parser 406. If the subframe is an almanac subframe including satellite almanac data, it goes to step 512: the subframe is transmitted to the almanac parser 407.

In step 504, if the received navigation data is not complete and the subframe synchronizer 404 is not able to complete the subframe synchronization (i.e., the receiver starts to receive data from the middle of a subframe), the first part of the received subframe is temporarily stored in the data storage unit 402 (step 514). When the subframe synchronizer 404 completes the synchronization of the next subframe, it can find that the data storage unit 402 still stores the remaining bit data. During the next retransmission, the subframe merge unit 403 receives the second part of the ephemeris subframe from subframe synchronizer 404 (step 516) and reads the first part of the ephemeris subframe from the data storage unit 402. The complete ephemeris subframe is obtained by merging the first part and the second part (step 518). Then, it goes to step 510, the subframe is transmitted to the ephemeris parser decider 405 and the ephemeris parser 406.

Please note that, the ephemeris collection method 500 according to the present disclosure mainly aims to speed up the collection of ephemeris. Therefore, in order to simplify the description and highlight the essence of present teaching, the above steps only merge the subframes including the satellite ephemeris data and then transmit the subframes to the ephemeris parser decider and the ephemeris parser. However in practical operations (still take the GPS receiver as an example), assuming that the GPS receiver starts to receive bit data from the 21 st bit of the word 5 of the subframe 4, the GPS receiver cannot complete the synchronization of the subframe 4, and it temporarily stores the first part of the received subframe 4 in the data storage unit 402. After the synchronization of subframe 5 is completed, the GPS receiver can identify the position of the first received bit data and the subframe boundary as described above. Then, the GPS receiver can discard the previous stored part of the subframe 4 or merge the almanac subframe 4 in a way similar to the merge of the ephemeris subframe, which is not the limitation of the present disclosure.

While the foregoing description and drawings represent embodiments of the present disclosure, it will be understood that various additions, modifications and substitutions may be made therein without departing from the spirit and scope of the principles of the present disclosure as defined in the accompanying claims. One skilled in the art will appreciate that the present teaching may be used with many modifications of form, structure, arrangement, proportions, materials, elements, and components and otherwise, used in the practice of the present teaching, which are particularly adapted to specific environments and operative requirements without departing from the principles of the present disclosure. The presently disclosed embodiments are therefore to be considered in all respects as illustrative and not restrictive, the scope of the present teaching being indicated by the appended claims and their legal equivalents, and not limited to the foregoing description.

## Claims

1. An ephemeris collection device comprising:
a data storage unit, configured to store a first part of a first ephemeris subframe if a synchronization of the first ephemeris subframe is not completed;
and
a subframe merge unit, coupled with the data storage unit and configured to:
receive a second part of the first ephemeris subframe, and retrieve the first part of the first ephemeris subframe from the data storage unit during a subsequent transmission of the first ephemeris subframe, and
obtain a complete first ephemeris subframe based on the first part and the second part of the first ephemeris subframe.

2. The ephemeris collection device according to claim 1, further comprising a subframe synchronizer coupled to the subframe merge unit, and configured to synchronize a plurality of subframes.

3. The ephemeris collection device according to claim 2, wherein the subframe synchronizer is further configured to identify a plurality of ephemeris subframes and/or a plurality of almanac subframes among the plurality of subframes.

4. The ephemeris collection device according to one of claims 1 to 3, further comprising a counter, a count value of which indicates a number of bits stored in the data storage unit.

5. The ephemeris collection device of claim 4, further configured to identify a start position for receiving the plurality of subframes according to the count value after the subframe synchronizer completes a synchronization of a second subframe, wherein the plurality of subframes comprises the first ephemeris subframe and the second subframe following the first ephemeris subframe.

6. The ephemeris collection device according to one of claims 3 to 5, wherein the ephemeris collection device further comprises:
an ephemeris parser, coupled to the subframe synchronizer and the subframe merge unit, and configured to detect whether the plurality of ephemeris subframes have any character error,
wherein an ephemeris subframe is discarded if any character error from the ephemeris subframe is detected, and
wherein a satellite ephemeris is obtained based on the plurality of ephemeris subframes having no detected character error.

7. The ephemeris collection device according to one of claims 3 to 6, further comprising an almanac parser, coupled to the subframe synchronizer, and configured to receive the plurality of almanac subframes to obtain a satellite almanac.

8. The ephemeris collection device according to claim 6, wherein the ephemeris parser is further configured to check a clock parameter, and wherein the ephemeris collection device or a receiver processor discards the plurality of subframes until an ephemeris update is completed depending on whether the clock parameter indicates that the ephemeris update is going to happen.

9. The ephemeris collection device according to one of claims 1 to 8, wherein the ephemeris collection device further comprises:
a demodulator, coupled to the data storage unit, and configured to demodulate navigation data and transmit the demodulated data to the data storage unit.

10. The ephemeris collection device according to one of claims 2 to 9, wherein each of the plurality of subframes comprises a handover word and a telemetry word, which are configured to complete subframe synchronization and indicate subframe ID respectively.

11. The ephemeris collection device according to one of claims 2 to 10, further comprising a receiver, wherein the receiver retransmits the plurality of subframes every 30 seconds, and wherein an ephemeris update happens every 2 hours.

12. A receiver, comprising:
a signal receiver configured to receive a satellite signal;
and
an ephemeris collection device as claimed in one of claims 1 to 10.

13. The receiver according to claim 12, wherein the receiver retransmits the plurality of subframes every 30 seconds, and wherein an ephemeris update happens every 2 hours.

14. An ephemeris collection method, comprising:
storing a first part of a first ephemeris subframe in a data storage unit if a synchronization of the first ephemeris subframe is not completed;
receiving a second part of the first ephemeris subframe during a subsequent transmission of the first ephemeris subframe;
retrieving the first part of the first ephemeris subframe from the data storage unit; and
obtaining a complete first ephemeris subframe based on the first part and the second part of the first ephemeris subframe.

15. The ephemeris collection method according to claim 14, further comprising:
calculating a number of bits stored in the data storage unit; and
identifying a start position for receiving a plurality of subframes after a synchronization of a second subframe is received, wherein the plurality of subframes comprises the first ephemeris subframe and the second subframe following the first ephemeris subframe.

16. The ephemeris collection method according to one of claims 14 or 15, further comprising:
receiving a plurality of ephemeris subframes among a plurality of subframes;
detecting whether the plurality of ephemeris subframes have any character error;
discarding an ephemeris subframe if any character error from the ephemeris subframe is detected;
transmitting obtaining a satellite ephemeris based on the plurality of ephemeris subframes having no detected character error.

17. The ephemeris collection method according to one of claims 15 or 16, further comprising receiving a plurality of almanac subframes among the plurality of subframes to obtain a satellite almanac.

18. The ephemeris collection method according to one of claims 15 to 17, further comprising:
checking a clock parameter; and
discarding the plurality of subframes until an ephemeris update is completed depending on whether the clock parameter indicates that the ephemeris update is going to happen.
